# EUROPEAN PATENT SPECIFICATION

(11) **EP 1 156 728 B1**
(45) Date of publication and mention of the grant of the patent: **23.07.2003**
(21) Application number: 00901426.7
(22) Date of filing: 31.01.2000
(51) Int. Cl.: A47B 91/02, D06F 39/12, B60B 33/06

(54) **FOOT FOR THE CABINET OF ELECTRICAL HOUSEHOLD APPLIANCES AND OTHER FURNITURE ARTICLES**
FUSS FÜR EINEN ELEKTRISCHEN HAUSHALTSGERÄTSCHRANK UND ANDERE MÖBELSTÜCKE
PIED POUR RANGEMENTS D'APPAREILS ELECTROMENAGERS OU POUR D'AUTRES MEUBLES

(30) Priority: 03.02.1999 BR 9900365
(43) Date of publication of application: 28.11.2001
(73) Proprietor: Multibras S.A. Eletrodomésticos, CEP-04578-000 Sao Paulo, SP (BR)
(72) Inventor: ESPINDOLA, Estev o, Marino, CEP-89223-050 Joinville, SC (BR); QUEIROZ, Paulo, Roberto, CEP-89223-063 Joinville, SC (BR); RAMOS, Carlos, CEP-89227-010 Joinville, SC (BR)
(74) Representative: Held, Stephan, Dr.rer.nat., Dipl.-Chem.
(86) International application number: BR0000008
(87) International publication number: WO00045671

(56) References cited:
- FR-A- 2 677 630
- GB-A- 2 152 809
- US-A- 2 803 510
- US-A- 3 441 974

## Description

### Field of the Invention

The present invention refers to a foot for furniture in general and, more particularly, for cabinets of electrical household appliances, such as refrigerators, freezers and laundering machines, which allows these appliances to be moved relatively easily on the floor, leveled in the desired operational position and selectively locked against sliding.

### Background of the Invention

It is known from the prior art different constructions for a foot of the above mentioned type. In one of these constructions, there are provided front feet with adjustable height and rear rollers, the stability of the cabinet in the operational position being assured by attrition of the front feet against the floor. This solution is deficient regarding the movability of the cabinet and the locking thereof in the operational position. Another known solution comprises four feet in the form of rollers, which presents an expensive construction, which is difficult to be leveled and whose locking, usually not efficient, is achieved by interrupting the rotation of the rollers, which does not avoid the sliding on the floor.

There are also the feet, which may be adjusted by cams, in order to guarantee a more precise level adjustment, and which are usually applied to heavy products, such as the side by side combined refrigerators and freezers. This known solution is of complex and expensive construction, requiring multiple means to obtain the sliding, locking and leveling characteristics. US-A-3 441 974 forms the basis for the preamble of the independent claim. This prior art also shaw an adjustable appliance leg support of a complex construction.

### Disclosure of the Invention

It is a general objective of the present invention to provide a foot for the cabinet of electrical household appliances and other furniture articles, which allows, by means of a simple and relatively low cost construction, the cabinet to be easily manually moved on the floor, to have a simple and safe locking in the chosen operational position and to be correctly leveled in the position in which it is locked.

The objective above is achieved by providing a foot comprising:
- a body, which is externally threaded and has an upper portion to be attached to a support incorporated to the lower structure of the cabinet, and a lower portion carrying a seating surface, which is displaceable on a floor; and
- a nut, mounted around the body, so that it may be rotated by the user and thus axially displaced between a cabinet displacing position, in which its lower end face remains operatively disconnected from the floor, and a cabinet locking position, in which its lower end face is seated against the floor, with a sufficient force to avoid the displacement of the cabinet on the floor. Preferred embodiments of the invention are defined in the dependent claims.

### Brief Description of the Drawings

The invention will be described below, with reference to the attached drawings, in which:
Figure 1 is a lateral elevational view of the foot of the present invention, in the displacing position and mounted to a support incorporated to the lower structure of the cabinet;
Figure 2 is a diametral cross-sectional view of the assembly of figure 1;
Figure 3 is a perspective view of the foot shown in figures 1 and 2, illustrating a possible construction for its fixation to the respective support incorporated to the lower structure of the cabinet;
Figure 4 is an upper perspective view of the support, showing a constructive detail of the region thereof to which said foot is applied and affixed;
Figure 5 is a perspective view of the body of the foot illustrated in the previous figures;
Figure 6 is an upper end view of the body shown in figure 5;
Figure 7 is a lower perspective view of the body illustrated in figures 5 and 6;
Figure 8 is an exploded perspective view of another constructive form of the present invention, illustrating the body and the nut shown in figure 2, and a roller to be mounted to said body;
Figure 9 is a longitudinal cross-sectional view of the foot carrying the roller illustrated in figure 8 and in the cabinet displacing position; and
Figure 10 is a view similar to that of figure 9, but illustrating the foot in the cabinet locking position.

### Description of the Illustrated Embodiments

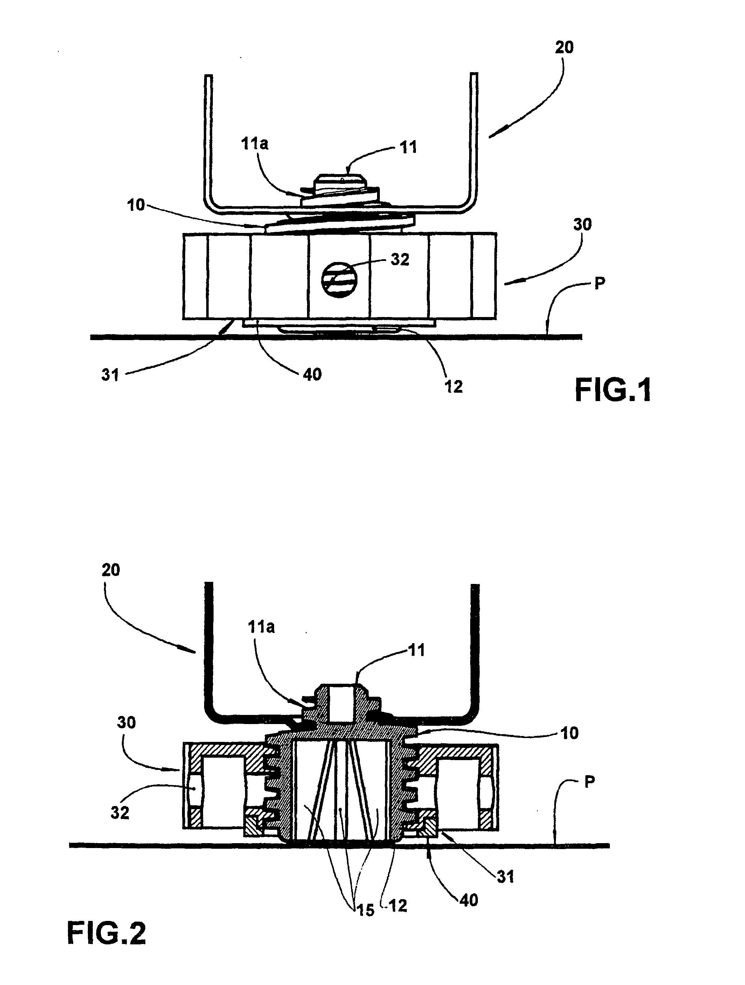

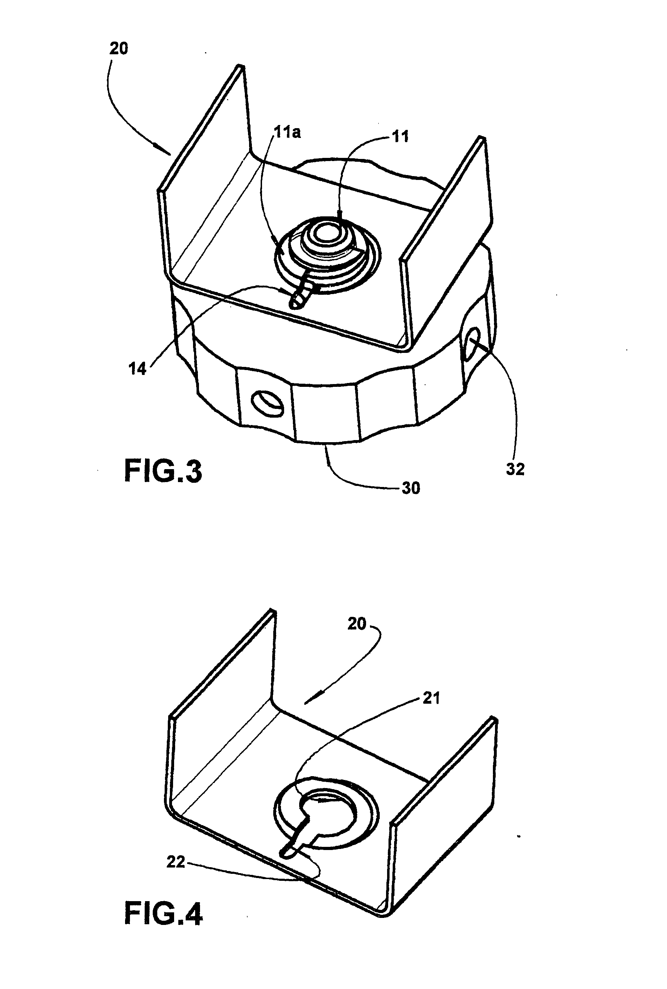

According to the appended drawings, the foot of the present invention is preferably produced in plastic material and comprises a body 10, which is externally threaded and incorporates an upper portion 11 to be engaged and affixed to a respective support 20 incorporated to the lower structure of a cabinet (not illustrated) of an electrical household appliance or any other piece of furniture, the body 10 having a lower portion 12 carrying a seating surface, which is displaceable on a floor P. In a constructive form of the invention, illustrated in figures 1-7, the lower portion 12 incorporates a sliding surface with the approximate shape of a spherical calotte portion, in order to be seated on a floor P, onto which the cabinet is supported, and allow said cabinet to slide easily on smooth or substantially smooth floors, without requiring much effort from the user.

According to the illustrated embodiment, the body 10 is in the form of a cylindrical tubular rod, with the lower end open and the upper end closed and defining the upper portion 11 in the form of an axial projection of smaller diameter than that of the body 10 and also provided with an external thread extension 11a. The upper portion 11 of the body 10 incorporates an eccentric salience 14, the function of which will be explained below.

With this construction, each foot has the upper portion 11 of its body 10 threaded into a hole 21 provided in a basic portion of the respective support 20, which is U shaped and incorporated to the lower structure of the cabinet (not shown). As illustrated in figures 2, 3 and 4, the hole 21 of each support 20 has its edge shaped so as to define a generally helical thread pitch, allowing the engagement with the external thread 11a of the upper portion 11 of the body 10 and the consequent axial locking of the latter to the support 20.

In order that the body 10 remains adequately affixed to the support 20 and locked both axially and rotatively thereto, the support 20 is provided with a slot 22 radially projecting from the hole 21 and which is positioned and dimensioned to receive the salience 24 incorporated to the upper portion of the body 10, when said face is seated against the support 20 at the end of the threading of the upper portion 11 into the hole 21.

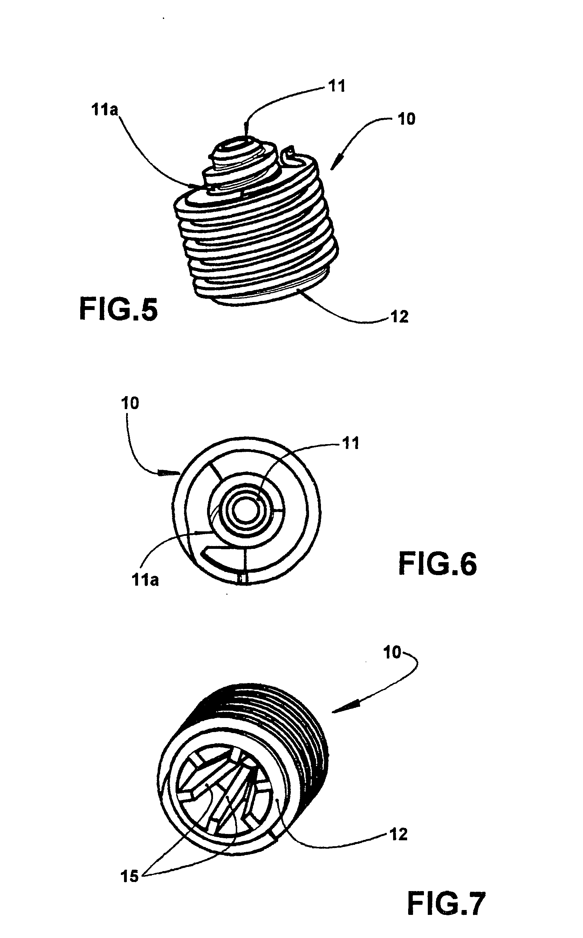

In the illustrated embodiment (figure 7), the body 10 incorporates, internally and from its open lower end, longitudinal ribs 15 which are angularly spaced from each other and shaped to be engaged to the respective support 20 by means of a powered mounting tool, upon affixing the body 10 to the respective support 20.

In the constructive form illustrated in figures 1-7, the body 10 defines the foot itself, since the lower end thereof, in the form of a centrally perforated spherical calotte portion, has the function of being seated onto the floor P and of allowing, thanks to the material with which the body 10 is formed and to the rounded shape, said foot to relatively easily slide on smooth or substantially smooth plane floors.

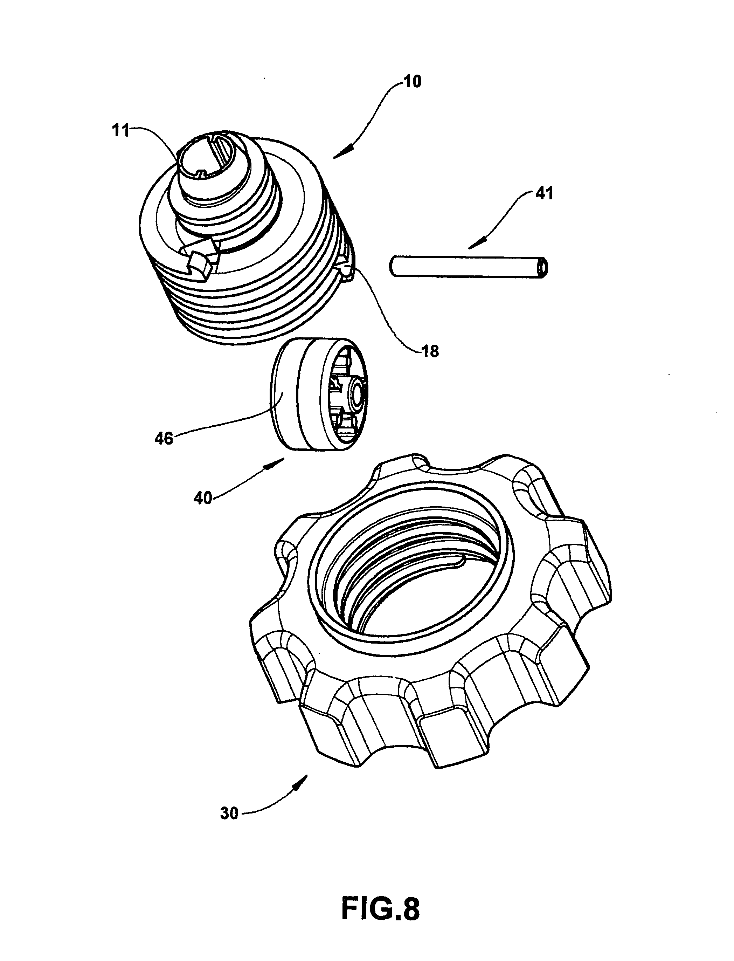

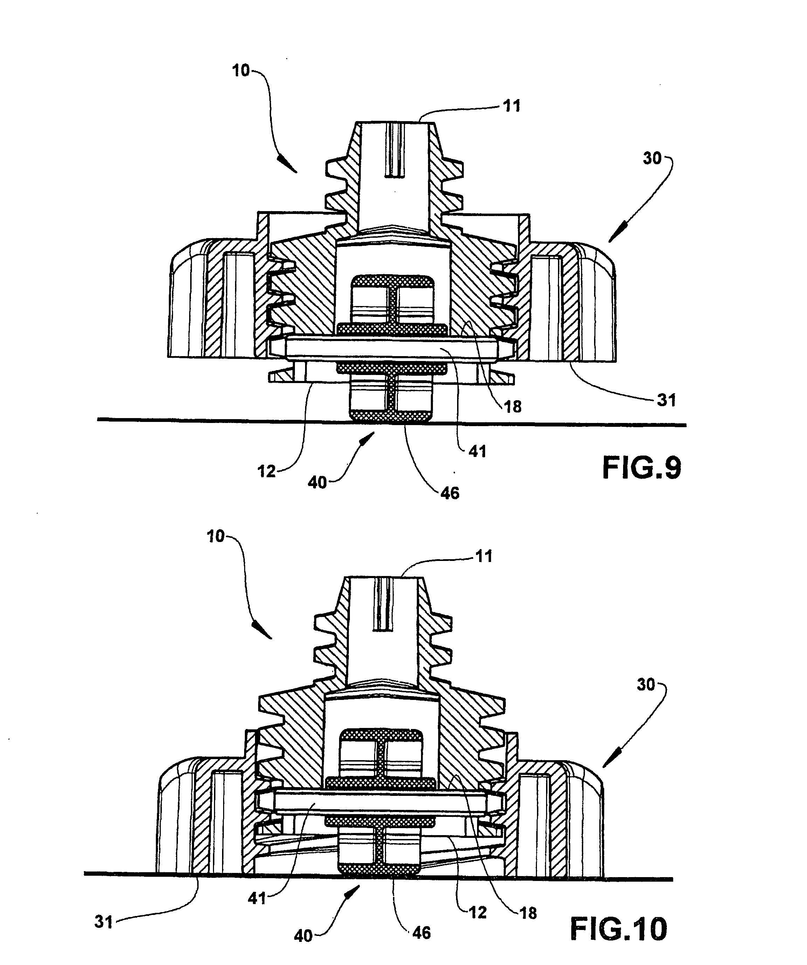

In another form of carrying out the present invention, as illustrated in figures 8-10, the body 10 carries, mounted at least partially therewithin, from its lower portion 12, a roller 40 defining a rolling surface 46, which is downwardly projected from a plane including a lower end face of the body 10 and which is seatable on the floor P when the foot is in a cabinet displacing position (figure 9). In this construction, the roller 40, which may be of the removable type, for example, is horizontally journalled to the lower portion 12 of the body 10 around a rotation shaft 41 having the ends thereof fitted into respective radial holes 18 provided in the body 10.

In order to guarantee that the present foot presents the other two operational characteristics, i.e., the selective locking against involuntary displacements (figure 10) and the leveling of the cabinet, a nut 30 is mounted around the externally threaded body 10, so that it may be rotatively and selectively moved by the user and axially displaced between the cabinet displacing position, in which its lower end face 31 remains operatively disconnected from the floor P and usually spaced therefrom, and a cabinet locking position (figure 10), in which its lower end face is seated against said floor P. Further rotation of nut 30 may be required in order to absorb, in a higher or lower degree, the weight of the cabinet, as a function of the locking and leveling requirements in each particular application.

The lower end face 31 of the nut 30 is preferably provided with a coating in an anti-sliding material, in order to facilitate its locking effect against displacement, when pressed against the floor P.

In the illustrated embodiment, the coating 50 in an anti-sliding material takes the form of an annular insert, which may be co-injected, fitted or affixed to the lower end face 31 of the nut 30. However, it should be understood that the anti-sliding material may be defined by the material that forms the nut 30.

The nut 30 has its surface preferably multi-faceted, alternating projecting face portions with recessed face portions, at least some of these faces being provided with radial holes 32 for introducing a tool, in order to apply a manual torque sufficient to promote the rotation of the nut 30 to its sliding and locking-leveling operational positions.

With the constructions described above, a foot of easy manufacture is provided, which is relatively cheap and which allows the user to obtain the displacing and locking-leveling functions of the cabinet by a very simple and safe manual operation.

## Claims

1. A foot for the cabinet of electrical household appliances and other furniture articles, comprising :
- a body (10), which is externally threaded and has an upper portion (11) to be attached to a support (20) incorporated to the lower structure of the cabinet, and a lower portion (12) carrying a seating surface (16,46) which is displaceable on a floor (P) : and
- a nut (30) mounted around the body (10),
**characterised in that** said nut (30) is adapted so that it may be rotated by the user and thus axially displaced between a cabinet displacing position, in which its lower end face (31) remains operatively disconnected from the floor (P), and a cabinet locking position, in which its lower end face (31) is seated against the floor (P), with a sufficient force to avoid the displacement of the cabinet on the floor (P).

2. Foot, as in claim 1, **characterized in that** the lower end face (31) of the nut (30) is at least partially defined as a coating (50) in an anti-sliding material.

3. Foot, as in claim 2, **characterized in that** the coating (50) in an anti-sliding material is defined by an annular insert, which is fitted into and affixed to the nut (30).

4. Foot, as in claim 2, **characterized in that** the nut (30) is provided with radial holes (32) in its lateral surface, in order to fit a tool for applying a manual torque.

5. Foot, as in claim 1, **characterized in that** the upper portion (11) of the body (10) is in the form of an axial projection of smaller diameter and provided with an external thread (11a) and engageable with the edge of a hole (21) provided in a basic portion of the respective support (20).

6. Foot, as in claim 5, **characterized in that** each hole (21) has its edge shaped in order to define a generally helical thread pitch to be engaged by the external thread (11a) of the upper portion (11) of the body (10).

7. Foot, as in claim 1, **characterized in that** the upper portion of the body (10) incorporates an eccentric salience (14) which is fittable in a slot (22) of the support (20) when the upper portion (11) of the body (10) is seated against the support (20) at the end of the threading of said external thread extension (11a) into the hole (21).

8. Foot, as in claim 1, **characterized in that** the body (10) takes the form of a cylindrical tubular rod with the lower end open and the upper end closed.

9. Foot, as in claim 8, **characterized in that** the body (10) incorporates, internally and from its open lower end, longitudinal ribs (15) which are angularly spaced and shaped to be engaged to the respective support (20) by a powered mounting tool, upon affixing the body (10) to the respective support (20).

10. Foot, as in claim 1, **characterized in that** the lower portion (12) incorporates a sliding surface (16) seatable onto the floor (P).

11. Foot, as in claim 10, **characterized in that** the lower portion (12) of the body (10) has the approximate form of a spherical calotte defining the sliding surface (16).

12. Foot, as in claim 1, **characterized in that** it includes a roller (40) which is horizontally journalled to the lower portion (12) of the body (10), in order to define a rolling surface (46) seatable on the floor (P) when the nut (30) is displaced to the cabinet displacing position.

13. Foot, as in claim 12, **characterized in that** the roller (40) is partially mounted inside the body (10) from the lower end (12) thereof.

14. Foot, as in claim 12, **characterized in that** the roller (40) is removable.

15. Foot, as in claim 14, **characterized in that** the roller (40) is mounted around a rotation shaft (41), whose ends are fitted into respective radial holes provided in the body (10).

## Patentansprüche

1. Fuß für das Gehäuse von elektrischen Haushaltsgeräten und anderem Mobiliar, mit
- einem Körper (10), der außen mit Gewinde versehen ist und einen oberen Teil (11), der an einem im Unterbau des Gehäuses enthaltenen Träger (20) zu befestigen ist, und einen unteren Teil (12) aufweist, der eine Auflagefläche (16, 46) trägt, die auf einem Boden (P) verschiebbar ist, und
- einer Mutter (30), die rings um den Körper (10) montiert ist, **dadurch gekennzeichnet, dass** die Mutter (30) so eingerichtet ist, dass sie vom Benutzer gedreht werden kann und somit zwischen einer Gehäuseverschiebeposition, in der ihre untere Stirnfläche (31) wirksam vom Boden (P) getrennt bleibt, und einer Gehäuseblockierposition, in der ihre untere Stirnfläche (31) mit genügend Kraft auf dem Boden (P) aufliegt, um die Verschiebung des Gehäuses auf dem Boden (P) zu vermeiden, axial verlagert werden kann.

2. Fuß wie in Anspruch 1, **dadurch gekennzeichnet, dass** die untere Stirnfläche (31) der Mutter (30) mindestens teilweise als eine Beschichtung (50) aus rutschsicherem Material gebildet ist.

3. Fuß wie in Anspruch 2, **dadurch gekennzeichnet, dass** die Beschichtung (50) aus rutschsicherem Material durch einen ringförmigen Einsatz gebildet wird, der in die Mutter (30) eingepasst und daran befestigt ist.

4. Fuß wie in Anspruch 2, **dadurch gekennzeichnet, dass** die Mutter (30) mit radialen Löchern (32) in ihrer Seitenfläche versehen ist, um zu einem Werkzeug zum Ausüben von manueller Drehkraft zu passen.

5. Fuß wie in Anspruch 1, **dadurch gekennzeichnet, dass** der obere Teil (11) des Körpers (10) die Form eines axialen Vorsprungs mit kleinerem Durchmesser hat und mit einem Außengewinde (11a) versehen ist und mit dem Rand eines Lochs (21) in Eingriff gebracht werden kann, das in einem Grundteil des entsprechenden Trägers (20) vorgesehen ist.

6. Fuß wie in Anspruch 5, **dadurch gekennzeichnet, dass** der Rand jedes Lochs (21) geformt ist, um eine allgemein schraubenförmige Gewindesteigung zu bilden, in die das Außengewinde (11a) des oberen Teils (11) des Körpers (10) eingreifen kann.

7. Fuß wie in Anspruch 1, **dadurch gekennzeichnet, dass** der obere Teil des Körpers (10) einen exzentrischen Vorsprung (14) enthält, der in einen Schlitz (22) des Trägers (20) passt, wenn der obere Teil (11) des Körpers (10) am Ende des Einschraubens der Außengewindeverlängerung (11a) in das Loch (21) am Träger (20) anliegt.

8. Fuß wie in Anspruch 1, **dadurch gekennzeichnet, dass** der Körper (10) die Form eines zylindrischen rohrförmigen Stabes annimmt, dessen unteres Ende offen und dessen oberes Ende geschlossen ist.

9. Fuß wie in Anspruch 8, **dadurch gekennzeichnet, dass** der Körper (10) innen und von seinem offenen unteren Ende aus längliche Stege (15) enthält, die in Winkelabständen angeordnet und geformt sind, um mittels eines angetriebenen Montagewerkzeuges mit dem entsprechenden Träger (20) in Eingriff gebracht zu werden, wenn der Körper (10) an dem entsprechenden Träger (20) befestigt wird.

10. Fuß wie in Anspruch 1, **dadurch gekennzeichnet, dass** der untere Teil (12) eine Gleitfläche (16) enthält, die auf dem Boden (P) aufliegen kann.

11. Fuß wie in Anspruch 10, **dadurch gekennzeichnet, dass** der untere Teil (12) des Körpers (10) die zweckmäßige Form einer Kugelkalotte hat, die die Gleitfläche (16) bildet.

12. Fuß wie in Anspruch 1, **dadurch gekennzeichnet, dass** er eine Rolle (40) enthält, die horizontal am unteren Teil (12) des Körpers (10) gelagert ist, um eine Wälzfläche (46) zu bilden, die auf dem Boden (P) aufliegen kann, wenn die Mutter (30) in die Gehäuseverschiebeposition verlagert wird.

13. Fuß wie in Anspruch 12, **dadurch gekennzeichnet, dass** die Rolle (40) teilweise innerhalb des Körpers (10) von dessen unterem Ende (12) aus montiert ist.

14. Fuß wie in Anspruch 12, **dadurch gekennzeichnet, dass** die Rolle (40) abnehmbar ist.

15. Fuß wie in Anspruch 14, **dadurch gekennzeichnet, dass** die Rolle (40) rings um eine Drehwelle (41) montiert ist, deren Enden in entsprechende radiale Löcher eingepasst sind, die in dem Körper (10) vorgesehen sind.

## Revendications

1. Pied pour la carcasse d'appareils électroménagers et d'autres articles de mobilier, comprenant :
un corps (10), qui est fileté extérieurement et qui comporte une partie supérieure (11) à fixer à un support (20) incorporé à la structure inférieure de la carcasse, et une partie inférieure (12) portant une surface (16, 46) d'appui qui peut être déplacée sur le sol (P) ; et
un écrou (30) monté autour du corps (10), **caractérisé en ce que** ledit écrou (30) est adapté de sorte qu'il peut être tourné par l'utilisateur et décalé ainsi axialement entre une position de déplacement de carcasse, dans laquelle sa face inférieure (31) d'extrémité demeure séparée du point de vue fonctionnel du sol (P), et une position de blocage de carcasse, dans laquelle sa face inférieure (31) d'extrémité est appuyée contre le sol (P) avec une force suffisante pour empêcher le déplacement de la carcasse sur le sol (P).

2. Pied selon la revendication 1, **caractérisé en ce que** la face inférieure (31) d'extrémité de l'écrou (30) est au moins partiellement définie en tant que revêtement (50) en matière antidérapante.

3. Pied selon la revendication 2, **caractérisé en ce que** le revêtement (50) en matière antidérapante est défini par un insert annulaire, lequel est ajusté dans et fixé à l'écrou (30).

4. Pied selon la revendication 2, **caractérisé en ce que** l'écrou (30) est pourvu de trous radiaux (32) dans sa surface latérale servant à l'introduction d'un outil pour application d'un couple manuel.

5. Pied selon la revendication 1, **caractérisé en ce que** la partie supérieure (11) du corps (10) a la forme d'une saillie axiale de diamètre plus petit et est pourvue d'un filetage extérieur (11a) et pouvant engager avec le bord d'un trou (21) réalisé dans une partie de base du support respectif (20).

6. Pied selon la revendication 5, **caractérisé en ce que** le bord de chaque trou (21) est formé pour définir un pas de taraudage globalement hélicoïdal devant être engagé par le filetage extérieur (11a) de la partie supérieure (11) du corps (10).

7. Pied selon la revendication 1, **caractérisé en ce que** la partie supérieure du corps (10) incorpore une saillie excentrique (14) qui peut s'ajuster dans une fente (22) du support (20) lorsque la partie supérieure (11) du corps (10) est appuyée contre le support (20) à la fin du vissage de ladite longueur de filetage extérieur (11a) dans le trou (21).

8. Pied selon la revendication 1, **caractérisé en ce que** le corps (10) a la forme d'une tige tubulaire cylindrique dont l'extrémité inférieure est ouverte et dont l'extrémité supérieure est fermée.

9. Pied selon la revendication 8, **caractérisé en ce que** le corps (10) incorpore, de manière intérieure, et à partir de son extrémité inférieure ouverte, des nervures longitudinales (15) qui sont espacées angulairement et formées pour engagement du support respectif (20) par un outil de montage mécanique lors de la fixation du corps (10) au support respectif (20).

10. Pied selon la revendication 1, **caractérisé en ce que** la partie inférieure (12) incorpore une surface glissante (16) pouvant être appuyée sur le sol (P).

11. Pied selon la revendication 10, **caractérisé en ce que** la partie inférieure (12) du corps (10) a la forme approximative d'une calotte sphérique définissant la surface glissante (16).

12. Pied selon la revendication 1, **caractérisé en ce qu'**il comprend un rouleau (40) qui est monté pour rotation horizontale à la partie inférieure (12) du corps (10), pour définir une surface (46) de roulement pouvant être appuyée sur le sol (P) lorsque l'écrou (30) est décalé vers la position de déplacement de carcasse.

13. Pied selon la revendication 12, **caractérisé en ce que** le rouleau (40) se monte partiellement à l'intérieur du corps (10) à partir de son extrémité inférieure (12).

14. Pied selon la revendication 12, **caractérisé en ce que** le rouleau (40) est amovible.

15. Pied selon la revendication 14, **caractérisé en ce que** le rouleau (40) est monté autour d'un axe (41) de rotation dont les extrémités sont introduites dans des trous radiaux respectifs réalisés dans le corps (10).
